# FASCICULE DE BREVET EUROPEEN

(11) **EP 3 130 149 B1**
(45) Date de publication et mention de la délivrance du brevet: **27.10.2021**
(21) Numéro de dépôt: 15714232.4
(22) Date de dépôt: 08.04.2015
(51) Int. Cl.: H04N 21/422, H04N 21/442, H04N 21/41, H04N 21/4363, H04N 21/436, H04N 21/482

(54) **SYSTÈME D'APPAREILS CONNECTÉS**
SYSTEM VERBUNDENER GERÄTE
SYSTEM OF CONNECTED APPARATUSES

(30) Priorité: 08.04.2014 EP 14163936
(43) Date de publication de la demande: 15.02.2017
(73) Titulaire: The Swatch Group Research and Development Ltd, 2074 Marin (CH)
(72) Inventeur: HAYEK, Georges Nicolas, CH-8032 Zürich (CH); WILLEMIN, Michel, CH-2515 Prêles (CH); GOTTIER, Hans-Rudolf, CH-2553 Safnern (CH); BAZIN, Jean-Luc, F-74500 Publier (FR)
(74) Mandataire: Collé, Emmanuel
(86) Numéro de dépôt international: PCT/EP2015/057595
(87) Numéro de publication internationale: WO 2015/155223

(56) Documents cités:
- WO-A1-2008/117105
- CN-A- 103 686 329
- US-A1- 2007 067 808
- US-A1- 2008 081 558
- None

## Description

La présente invention concerne un ensemble d'appareils comprenant au moins un appareil de réception et au moins un objet portable, ledit appareil de réception comprenant des moyens de réception d'un signal multicanal aptes à conserver une partie du signal émis sur un canal particulier permettant de recevoir des informations sous forme de programme, des moyens de conversion associés à des moyens de propagation pour diffuser lesdites informations et des moyens de communication, l'ensemble d'appareils comprenant en outre un objet portable comportant un module électronique pour le fonctionnement dudit objet portable, le module électronique comprenant au moins une unité de calcul et un circuit de communication sans fil apte à communiquer avec les moyens de communication de l'appareil de réception

### ARRIERE PLAN TECHNOLOGIQUE

Il est connu des appareils de réception comme des téléviseurs ou des postes de radio recevant des signaux d'informations vidéo et/ou sonore pour les restituer à des utilisateurs. Le signal reçu est émis sur une bande de fréquence et l'appareil de réception est capable de sélectionner une fréquence précise parmi cette bande de fréquence. Les signaux sont actuellement souvent digitaux. Pour un téléviseur, ces différents signaux correspondent aux différentes chaines alors que pour un poste de radio, ces différents signaux correspondent aux différentes stations.

Les informations reçues se présentent sous la forme de programme vidéo et/ou sonore.

L'utilisateur manipule ledit appareil de réception ou utilise une télécommande dédiée à l'appareil pour sélectionner le canal désiré et ainsi voir et/ou écouter le programme qu'il souhaite.

Afin d'améliorer l'usage de ces appareils de réception, l'utilisateur est capable de les programmer pour avoir une liste de favoris c'est-à-dire créer des raccourcis pour atteindre directement sa ou ses chaines ou stations préférées.

Des exemples d'appareils connus de l'état de l'art sont décrits dans les documents US2008081558, WO2008117105, US2007067808 et CN103686329.

Toutefois, cela ne lui permet que d'atteindre sa ou ses chaines ou stations préférées et non pas son émission ou son type d'émission préféré de sorte qu'il doit toujours balayer l'ensemble des chaines ou stations pour voir si un programme lui convient.

### RESUME DE L'INVENTION

La présente invention cherche donc à pallier les inconvénients de l'art antérieur en fournissant un ensemble d'appareils dont la connectivité est améliorée.

A cet effet, l'invention concerne un ensemble d'appareils comprenant au moins un appareil de réception et au moins un objet portable, tel que défini dans la revendication indépendante 1.

Des réalisations avantageuses sont définies dans les revendications dépendantes 2 à 6.

### BREVE DESCRIPTION DES FIGURES

Les buts, avantages et caractéristiques du dispositif selon la présente invention apparaîtront plus clairement dans la description détaillée suivante d'au moins une forme de réalisation de l'invention donnée uniquement à titre d'exemple non limitatif et illustrée par les dessins annexés sur lesquels :
- Les figures 1 et 2 représentent schématiquement l'ensemble d'appareils selon la présente invention.
- Les figures 3 et 4 représentent schématiquement des méthodes de gestion de conflit selon la présente invention.

### DESCRIPTION DETAILLEE

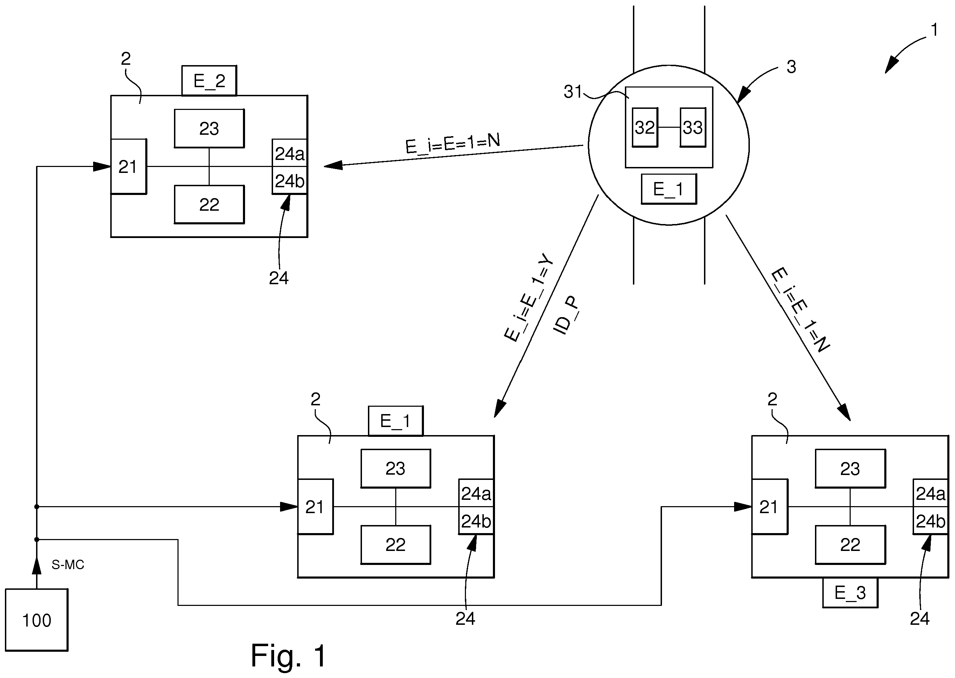

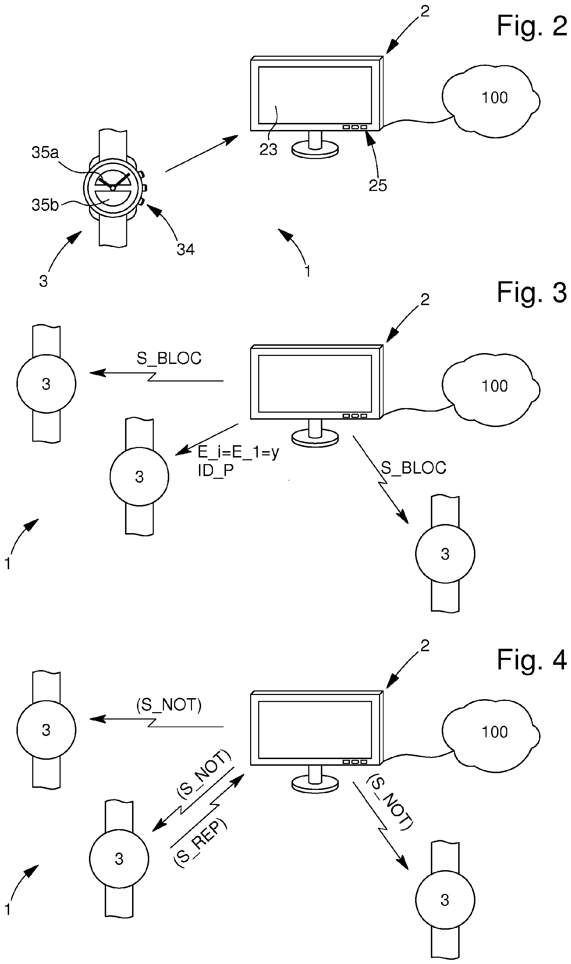

Un ensemble d'appareils 1 selon la présente invention est représenté aux figures 1 et 2. Un tel ensemble d'appareils 1 comprend au moins un appareil de réception 2 et au moins un objet portable 3.

L'appareil de réception 2 comprend des moyens de réception 21 tel qu'un circuit de réception, capable de recevoir un signal multicanal analogique ou numérique.

Dans le cas d'un signal analogique (utilisé dans le reste de la description), le signal multicanal (S_MC) est un signal électromagnétique émis sur une bande de fréquences par un émetteur 100. L'appareil de réception est capable de conserver la partie du signal émise sur un canal particulier, ici une fréquence particulière, et de rejeter les parties du signal émises sur les autres fréquences. Le signal électromagnétique est émis par une source émettrice et peut être transmis par ondes ou par câbles.

Chaque partie du signal émise sur une fréquence particulière permet à l'utilisateur de recevoir des informations sous forme de programme. Chaque fréquence particulière de la bande de fréquence porte un identifiant (ID_Y) de fréquence. De plus, chaque programme porte un identifiant (ID_X) lié au programme. Cet identifiant programme (ID_X) peut se présenter sous forme d'un code à plusieurs chiffres. Ce code est composé de plusieurs groupes de chiffres donnant chacun une indication. Ces indications peuvent porter sur la fréquence particulière sur laquelle le programme est émis, la nature du programme c'est-à-dire s'il s'agit de sport, de divertissement, de culture, d'informations, sur le genre c'est-à-dire le genre de sport : football, rugby, course automobile et des informations encore plus précises comme par exemple le type de programme c'est-à-dire s'il s'agit un match de foot de championnat national ou un match de foot de coupe européenne ou un match de foot de coupe du monde.

Par exemple, l'identifiant programme (ID_X) peut être codé sur un code à 12 chiffres décomposé en quatre groupes de trois chiffres (par exemple l'identifiant X est codé comme suit : AAABBBCCCDDD avec AAA correspondant à la chaine, BBB correspondant à la nature, CCC correspondant au genre et DDD correspondant au type), chaque groupe (AAA, BBB, CCC, DDD) correspondant à un type d'information. Ces groupes de trois chiffres (AAA, BBB, CCC, DDD) peuvent faire partie d'une base de données.

L'appareil de réception 2 comprend en outre des moyens de conversion 22 comme un démodulateur pour convertir la partie sélectionnée du signal émis sur une fréquence particulière en un signal d'information qui pourra être utilisé par des moyens de propagation 23 comme un écran et/ou des haut-parleurs.

On comprend ici que l'appareil de réception 2 peut être un téléviseur numérique ou analogique ou un poste de radio numérique ou analogique ou un ordinateur ou une tablette tactile ou tout appareil apte à recevoir un signal multicanal, à le traiter et à le convertir pour le diffuser.

L'appareil de réception 2 comprend en outre un circuit de communication 24 rendant apte ledit appareil 2 à communiquer avec d'autres appareils, le module de communication 24 comportant un circuit de communication filaire 24a et/ou un circuit de communication sans fil 24b. Ce circuit de communication sans fil est muni d'une interface utilisant un protocole choisi parmi la liste des protocoles suivants : Bluetooth Smart®, le protocole WiFi, la communication en champ proche (en anglais near field communication, NFC) ou autres protocoles propriétaires ou standards.

Bien entendu, le circuit de communication sans fil pourra être muni de plusieurs interfaces utilisant chacune un protocole ou une seule interface apte à utiliser plusieurs protocoles différents.

De plus, l'appareil de réception 2 pourra comprendre en outre des moyens de commande 25.

L'objet portable 3 comprend un module électronique 31 pour le fonctionnement dudit objet portable. Ce module électronique comprend au moins une unité de calcul 32 et un circuit de communication sans fil 33. Ce circuit de communication sans fil est muni d'une interface utilisant un protocole choisi parmi la liste des protocoles suivants : Bluetooth Smart®, le protocole WiFi, la communication en champ proche (en anglais near field communication, NFC) ou autres protocoles propriétaires ou standards.

Bien entendu, le circuit de communication sans fil pourra être muni de plusieurs interfaces utilisant chacune un protocole ou une seule interface apte à utiliser plusieurs protocoles différents.

Le module électronique 31 peut en outre comporter des moyens d'affichage pour permettre à l'utilisateur de lire des informations et des moyens de commande pour permettre à l'utilisateur d'agir sur l'objet portable

Par exemple, l'objet portable peut être une montre ou un bracelet ou un téléphone portable ou un smartphone ou une télécommande. L'objet portable 3 est également muni de moyens de commande 34 comme des poussoirs ou des touches tactiles et peut être muni de moyens d'affichage 35. Les moyens d'affichage peuvent être utilisés dans le cadre de l'utilisation d'une fonction ou peuvent être utilisés dans le cadre de plusieurs fonctions, et peuvent être des aiguilles 35a et/ou des écrans par exemple du type LCD 35b.

Avantageusement selon l'invention, ledit au moins un appareil de réception et ledit au moins un objet portable de l'ensemble d'appareils comprennent chacun une étiquette spécifique (E_i) lié audit ensemble. Cette étiquette spécifique est comme un identifiant qui permet aux appareils de réception et aux objets portables de se reconnaitre entre eux via un protocole de reconnaissance.

En effet, l'objet portable 3 est configuré pour que son module électronique 31 et son circuit de communication 33 testent régulièrement, dans son périmètre de communication, la présente d'appareils de réception sur la base de l'étiquette spécifique avec une réponse positive (Y) ou une réponse négative (N).

Lorsqu'un test de présence d'un appareil de réception est confirmé, l'objet portable est configuré pour interagir avec lui.

Bien entendu, le test de présence d'un appareil de réception 2 est effectué dans une zone équivalente au rayon d'action du circuit de communication de l'objet portable. Par exemple, si le protocole Bluetooth Smart ® est utilisé, le rayon d'action sera d'environ 10m alors que si la communication en champ proche (en anglais nearfield communication, NFC) est utilisée, le rayon d'action sera plutôt autour de 2 à 30cm. On comprendra qu'il est possible en modifiant des composants ou des paramètres du circuit de communication 24 de l'objet portable 3, d'ajuster le rayon d'action dudit circuit de communication 24. Cela permettrait par exemple, d'avoir un circuit de communication 24 utilisant le protocole Bluetooth Smart ® et ayant une portée de 2m.

En effet, avantageusement selon l'invention, l'objet portable 3 est préalablement programmé avec un identifiant (ID_P) lié aux programmes ou à la chaine.

Par conséquent, lorsque l'objet portable 3 est proche d'un appareil de réception appartenant à l'ensemble d'appareils 1, l'objet portable 3 agit sur cet appareil de réception en communiquant l'identifiant lié aux programmes ou à la chaine par envoi d'un signal muni d'une commande.

Si l'identifiant est lié à un programme, cette interaction entre l'objet portable 3 et l'appareil de réception 2 entraine, de la part de l'appareil de réception 2, une réaction consistant à modifier la fréquence particulière sélectionnée et à balayer les différentes fréquences du signal électromagnétique pour sélectionner la fréquence sur laquelle un programme avec le même identifiant est en cours de diffusion.

Par exemple, l'objet portable est programmé avec un identifiant lié aux programmes de sport et plus particulièrement lié au genre football. Avec l'exemple d'identifiant codée comme suit AAABBBCCCDDD (avec AAA correspondant à la chaine, BBB correspondant à la nature, CCC correspondant au genre et DDD correspondant au type), la partie du code CCC est la partie qui est programmée. Lorsque l'objet portable est proche d'un appareil de réception appartenant à l'ensemble d'appareils, la partie du code CCC programmée est communiquée à l'appareil de réception qui va balayer l'ensemble des fréquences particulières pour sélectionner la fréquence particulière sur laquelle, au même instant, un programme de sport lié au football est en cours.

Si l'identifiant est lié à une chaine c'est-à-dire à une fréquence particulière, cette interaction entre l'objet portable 3 et l'appareil de réception 2 entraine, de la part de l'appareil de réception 2, une réaction consistant à modifier la fréquence particulière en balayant les différentes fréquences du signal électromagnétique pour sélectionner la fréquence liée à l'identifiant programmé. Bien entendu, dans le cas d'un signal multicanal numérique, la réaction consiste à modifier le canal particulier en balayant les différents canaux du signal multicanal pour sélectionner le canal lié à l'identifiant programmé.

L'interaction entre l'objet portable 3 avec l'appareil de réception 2 peut être automatique de sorte que le changement de fréquence de l'appareil de réception 2 se fasse automatiquement sans intervention extérieure.

Toutefois, cette interaction peut être semi-automatique de sorte à avoir une étape dite de confirmation dans laquelle il est signalé à l'utilisateur qu'un appareil de réception 2 compatible c'est-à-dire appartenant à l'ensemble d'appareils est détecté. Il est alors demandé à l'utilisateur, via les moyens d'affichage, s'il veut interagir avec cet appareil de réception 2. L'utilisateur agit alors sur les moyens de commande pour confirmer ou infirmer l'interaction.

Dans une première variante de l'invention, il peut être prévu d'avoir une fonction avec un identifiant supplémentaire qui est l'identifiant d'appareil. En effet, il peut être envisagé que l'objet portable 3 soit programmé pour n'interagir qu'avec un seul appareil de réception2. De ce fait, lorsque l'utilisateur portant l'objet portable 3 passe à côté de cet appareil de réception 2 particulier, l'objet portable 3 interagit avec lui alors que lorsqu'il passe à proximité d'un autre appareil 2 de l'ensemble 1, aucune interaction n'a lieu.

Dans une seconde variante, il peut être envisagé que l'identifiant lié aux programmes ou à la chaine, programmé dans la montre 3 est entré manuellement par l'utilisateur. Ce dernier peut alors, via une application installée directement dans l'objet portable 3 ou sur une application installée sur un objet de type smartphone ou tablette tactile, sélectionner l'identifiant voulu.

Dans une troisième variante, il peut être envisagé que plusieurs identifiants liés aux programmes ou aux chaines soient programmés automatiquement ou manuellement dans la montre 3. Cette multitude d'identifiants est classée par ordre de préférence. L'objet portable 2 agit alors comme suit.

Lorsque l'objet portable 3 est proche d'un appareil de réception 2 appartenant à l'ensemble d'appareils 1, l'objet portable 3 agit sur cet appareil de réception 2 en communiquant le premier identifiant lié aux programmes ou aux chaines de la liste. Cette interaction entre l'objet portable 3 et l'appareil de réception 2 entraine un balayage des différentes fréquences du signal électromagnétique pour sélectionner la fréquence particulière sur laquelle est diffusé un programme avec le même identifiant.

Toutefois, si à cet instant, il n'existe pas de fréquence particulière sur laquelle un programme avec le même identifiant est en cours, alors l'objet portable envoie le second identifiant de la liste pour que l'appareil de réception balaye les différentes fréquences afin de sélectionner la fréquence particulière sur laquelle un programme avec le second identifiant est en cours et ainsi de suite. Ce fonctionnement est le même de sorte que si la chaîne du premier identifiant est indisponible pour une quelconque raison ou non souhaitée par l'utilisateur alors c'est la chaine du second identifiant de la liste qui sera sélectionnée.

Dans une quatrième variante, il est prévu que les différents conflits puissent être résolus. Effectivement, si plusieurs utilisateurs avec un objet portable selon l'invention se retrouvent à proximité d'un appareil de réception compatible, il faut savoir qui est prioritaire pour la sélection de la fréquence particulière.

Pour cela, une première méthode, visible à la figure 3, consiste à dire que le premier utilisateur à proximité est prioritaire. L'appareil de réception 2 est alors configuré pour ensuite bloquer les interactions avec les autres objets portables 2 via un signal de blocage (S_BLOC).

Une seconde méthode, visible à la figure 4, pour gérer les conflits consiste à se dire que les porteurs ne sont pas forcément intéressés pour avoir automatiquement leur fréquence préférée sélectionnée sur les appareils de réception. Cette seconde méthode consiste donc à envoyer une notification via un signal (S_NOT) à tous les utilisateurs indiquant qu'il y a un conflit entre eux. Cette notification comprend en outre une demande de réponse que les utilisateurs doivent donner via un signal (S_REP) de sorte que le premier qui répond à cette notification sera prioritaire sur les autres. Les interactions avec les autres objets portables sont alors bloquées.

Ce blocage peut être actif jusqu'à ce que la fréquence particulière soit modifiée par un utilisateur via des commandes sur l'appareil de réception ou via une télécommande. Il est également possible que le blocage soit actif tant que l'objet portable 3 prioritaire se trouve à proximité. Si l'utilisateur de l'objet portable 3 prioritaire se déplace de sorte que l'appareil de réception 2 et l'objet portable 3 soient hors de portée l'un de l'autre alors le blocage disparait.

Dans une autre variante, la détection par l'objet portable 3 d'un appareil de réception 2 compatible peut se faire si ledit appareil de réception 2 se trouve en mode veille c'est-à-dire qu'il se trouve sous tension mais non actif. Ainsi, lorsque l'objet portable 3 est proche d'un appareil de réception 2 appartenant à l'ensemble d'appareils 1, l'objet portable agit sur cet appareil de réception en envoyant un ordre de sortie du mode veille et de passage au mode actif tout en communiquant l'identifiant lié aux programmes ou aux chaines désirées.

## Revendications

1. Ensemble d'appareils (1) comprenant un appareil de réception (2) permettant de diffuser des programmes de télévision ou de radio, ledit appareil de réception (2) comprenant des moyens de réception (21) d'un signal multicanal (S_MC) aptes à conserver une partie du signal émis sur un canal particulier permettant de recevoir des informations sous forme de programme de télévision ou de radio, des moyens de conversion (22) associés à des moyens de propagation (23) pour diffuser lesdites informations et des moyens de communications (24), l'ensemble d'appareils comprenant en outre une montre, appelée objet portable (3), comportant un module électronique (31) pour le fonctionnement dudit objet portable, le module électronique comprenant au moins une unité de calcul (32) et un circuit de communication sans fil (33) apte à communiquer avec les moyens de communication (24) de l'appareil de réception,
**caractérisé en ce que** chaque canal particulier est identifié par un identifiant de fréquence (ID_Y), et chaque programme est identifié par au moins un identifiant (ID_X), l'identifiant (ID_X) étant présenté sous la forme d'un code composé de plusieurs groupes de chiffres donnant chacun une indication, telle que la fréquence, la nature, le genre ou le type de programme, l'objet portable étant préalablement ou manuellement programmé avec au moins un identifiant spécifique (ID_P) lié à un type de programme par au moins une desdites indications, et **en ce que** l'objet portable est capable de détecter, via le circuit de communication sans fil (33), la présence de l'appareil de réception et d'agir sur ledit appareil de réception (2) en lui communicant ledit identifiant spécifique (ID_P) pour modifier le canal particulier et sélectionner un canal particulier dont le programme en cours de diffusion présente au moins un identifiant (ID_X) comprenant des indications identiques auxdites indications de l'identifiant programmé (ID_P) dans l'objet portable (3).

2. Ensemble d'appareils (1) selon la revendication 1, **caractérisé en ce que** le signal multicanal est analogique ou numérique.

3. Ensemble d'appareils (1) selon la revendication 1, **caractérisé en ce que** les moyens de communication sans fil (33) sont munis d'au moins une interface utilisant au moins un protocole.

4. Ensemble d'appareils (1) selon la revendication 3, **caractérisé en ce que** les moyens de communication sans fil (33) sont munis d'au moins deux interfaces utilisant chacune un protocole.

5. Ensemble d'appareils (1) selon les revendications 3 ou 4, **caractérisé en ce que** les protocoles sont choisis parmi la liste comprenant : Bluetooth Smart®, WiFi, NFC ou autres protocoles propriétaires ou standards.

6. Ensemble d'appareils (1) selon l'une des revendications précédentes, **caractérisé en ce que** ledit objet portable (3) comprend en outre des moyens de commande (34) et des moyens d'affichage (35).

## Patentansprüche

1. Verbund von Apparaten (1), einen Empfangsapparat (2) umfassend, der es ermöglicht, Fernseh- oder Radioprogramme auszustrahlen, wobei der Empfangsapparat (2) Empfangsmittel (21) eines Mehrkanalsignals (S_MC) umfasst, die imstande sind, einen Teil des gesendeten Signals in einem besonderen Kanal zu behalten, der es ermöglicht, Informationen in Form eines Fernseh- oder Radioprogramms zu empfangen, Umwandlungsmittel (22), die Verbreitungsmitteln (23) zugeordnet sind, um die Informationen auszustrahlen, und Kommunikationsmittel (24), wobei der Verbund von Apparaten weiter eine Uhr umfasst, die tragbarer Gegenstand (3) genannt wird, der ein elektronisches Modul (31) für den Betrieb des tragbaren Gegenstandes umfasst, wobei das elektronische Modul mindestens eine Berechnungseinheit (32) und einen drahtlosen Kommunikationskreis (33) umfasst, der imstande ist, mit den Kommunikationsmitteln (24) des Empfangsapparats zu kommunizieren,
**dadurch gekennzeichnet, dass** jeder besondere Kanal durch eine Frequenzkennung (ID_Y) identifiziert wird, und jedes Programm durch mindestens eine Kennung (ID_X) identifiziert wird, wobei die Kennung (ID_X) in Form eines Codes präsentiert wird, der sich aus mehreren Zifferngruppen zusammensetzt, die jeweils einen Hinweis, wie die Frequenz, die Art, das Genre oder den Typ eines Programmes angeben, wobei der tragbare Gegenstand zuvor oder von Hand mit mindestens einer speziellen Kennung (ID_P), die mit einem Programmtyp verknüpft ist, durch mindestens einen der Hinweise programmiert wird, und dadurch, dass der tragbare Gegenstand imstande ist, über den drahtlosen Kommunikationskreis (33) das Vorhandensein des Empfangsapparats zu erkennen und auf den Empfangsapparat (2) einzuwirken, indem diesem die spezielle Kennung (ID_P) mitgeteilt wird, um den besonderen Kanal zu modifizieren und einen besonderen Kanal auszuwählen, dessen in Ausstrahlung befindliches Programm mindestens eine Kennung (ID_X) aufweist, die identische Hinweise wie die Hinweise der programmierten Kennung (ID_P) in dem tragbaren Gegenstand (3) umfasst.

2. Verbund von Apparaten (1) nach Anspruch 1, **dadurch gekennzeichnet, dass** das Mehrkanalsignal analog oder digital ist.

3. Verbund von Apparaten (1) nach Anspruch 1, **dadurch gekennzeichnet, dass** die drahtlosen Kommunikationsmittel (33) mit mindestens einer Schnittstelle versehen sind, die mindestens ein Protokoll verwendet.

4. Verbund von Apparaten (1) nach Anspruch 3, **dadurch gekennzeichnet, dass** die drahtlosen Kommunikationsmittel (33) mit mindestens zwei Schnittstellen versehen sind, die mindestens jeweils ein Protokoll verwenden.

5. Verbund von Apparaten (1) nach den Ansprüchen 3 oder 4, **dadurch gekennzeichnet, dass** die Protokolle aus der Liste ausgewählt sind, die Folgendes umfasst: Bluetooth Smart®, Wifi, NFC oder andere anbieterspezifische oder Standardprotokolle.

6. Verbund von Apparaten (1) nach einem der vorstehenden Ansprüche, **dadurch gekennzeichnet, dass** der tragbare Gegenstand (3) weiter Steuerungsmittel (34) und Anzeigemittel (35) umfasst.

## Claims

1. Set of devices (1) comprising a receiver device (2) allowing to broadcast television or radio programmes, said receiver device (2) comprising means (21) for receiving a multichannel signal (S_MC) capable of preserving a part of the signal transmitted on a particular channel allowing information to be received in the form of a television or radio programme, conversion means (22) associated with propagation means (23) for broadcasting said information and communication means (24), the set of devices further comprising a watch, called portable object (3), including an electronic module (31) for the operation of said portable object, the electronic module comprising at least a calculation unit (32) and a wireless communication circuit (33) able to communicate with the communication means (24) of the receiver device,
**characterised in that** each particular channel is identified by a frequency identifier (ID_Y), and each programme is identified by at least one identifier (ID_X), the identifier (ID_X) being presented in the form of a code composed of several groups of characters each of which providing an indication, such as the frequency, the nature, the genre or the type of programme, the portable object being previously or manually programmed with at least one specific identifier (ID_P) associated with a type of programme by at least one of said indications, and **in that** the portable object is capable of detecting, via the wireless communication circuit (33), the presence of the receiver device and of acting on said receiver device (2) by communicating thereto said specific identifier (ID_P) in order to change the particular channel and to select a particular channel whose programme currently being broadcast has at least one identifier (ID_X) comprising indications identical to said indications of the identifier (ID_P) programmed in the portable object (3).

2. Set of devices (1) according to claim 1, **characterised in that** the multichannel signal is analogue or digital.

3. Set of devices (1) according to claim 1, **characterised in that** the wireless communication means (33) are provided with at least one interface using at least one protocol.

4. Set of devices (1) according to claim 3, **characterised in that** the wireless communication means (33) are provided with at least two interfaces each using a protocol.

5. Set of devices (1) according to claims 3 or 4, **characterised in that** the protocols are chosen from the list including: Bluetooth Smart®, WiFi, NFC or other proprietary or standard protocols.

6. Set of devices (1) according to any of the preceding claims, **characterised in that** said portable object (3) further includes control means (34) and display means (35).
